# EUROPEAN PATENT SPECIFICATION

(11) **EP 1 345 728 B1**
(45) Date of publication and mention of the grant of the patent: **08.06.2005**
(21) Application number: 01982609.8
(22) Date of filing: 14.11.2001
(51) Int. Cl.: B23K 20/04, B23K 20/233

(54) **METHOD OF MAKING A COMPOSITE ALUMINIUM SHEET**
VERFAHREN ZUR HERSTELLUNG EINES VERBUNDBLECHS AUS ALUMINIUM
METHODE DE FABRICATION D'UNE TOLE D'ALUMINIUM COMPOSITE

(30) Priority: 14.11.2000 GB 0027706
(43) Date of publication of application: 24.09.2003
(73) Proprietor: ALCAN INTERNATIONAL LIMITED, Montreal Quebec H3A 3G2 (CA)
(72) Inventor: HEWETT, Ian, P., Atlanta 30350-4319 (US); GRAY, Alan, Oxon OX15 4BB (GB); DAVIS, Keith G., Oxon OX16 7EQ (GB)
(74) Representative: Knowles, James Atherton
(86) International application number: PCT/GB2001/005005
(87) International publication number: WO 2002/040210

(56) References cited:
- GB-A- 2 298 250
- US-A- 2 691 815
- US-A- 3 470 607
- US-A- 3 649 227
- US-A- 4 820 355

## Description

This invention relates to a method of making a composite aluminium brazing sheet.

US patent 2,691,815 (issued 1954) describes a method of joining together two metal sheets, of the same or different metals and the same or different thicknesses. First, facing surfaces of the two sheets are cleaned to eliminate damaging surface films, e.g. by abrasion followed by heating. Second, the two sheets are cold rolled to provide nucleal bonds at discrete points. Preferably the softer metal is work hardened, so that the two sheets are as far as possible of the same hardness. Third, the combined sheets are heated (sintered) to form a strong bond between them. Although numerous examples are given, none show the bonding together of two Al alloys.

US-A-3,470,607, which forms the basis for the preamble of claim 1, discloses a process for obtaining composite metal articles characterised by rolling together the core and cladding by cold rolling to form a green bond and cold rolling the resultant poorly bonded composite.

US-A-4,820,355 discloses fabrication of, in particular, aluminium or aluminium alloy structures, such as metallic sandwich structures, fabricated by a method involving fine grain development of at least one component of the structure, in conjunction with roll bonding and superplastic forming.

The aluminium industry provides clad sheet consisting of a core layer and a cladding layer on a substantial scale, by the following technology. An ingot of the core alloy is cast, if necessary homogenised, scalped and cooled to ambient temperature. A slab of the cladding alloy is placed over the ingot and held in position. The composite is subjected to hot rolling (above 420°C) in a reversing mill where the thickness is reduced down to a level of about 10mm to 25mm.

The plate is hot rolled in a tandem mill down to sheet 3.0 - 3.5mm thick. Then the hot rolled composite sheet is cold rolled down to a desired thickness, that depends on the final product. It may be subjected to an intermediate anneal, and will generally be subjected to a final anneal in order to improve formability.

The presence of a cladding slab on top of the core ingot at least doubles the time required to be spent in the reversing mill. During passage through the reversing mill and the hot tandem mill, the cladding spreads longitudinally and laterally. A lot of mixed scrap of rather low value is generated. The yield of composite sheet is some 60-65% of the starting ingot. The thickness of the cladding may be limited because thick plates do not easily roll bond even during hot rolling. Despite its manifest disadvantages, this technology is currently used, and has been used since the 1960s, to make aluminium brazing sheet.

According to the present invention, the disadvantages of the prior technology are addressed by applying the cladding layer only after hot rolling of the core layer has been completed. Although it might be thought obviously desirable to add the cladding layer as late as possible in the thermomechanical process used to make the composite sheet, it was not at all clear that this would be possible. First, it was not clear that cold rolling would be effective to join two dissimilar sheets together by a bond strong enough to withstand stamping, deep drawing, ironing and other forming processes to which e.g. brazing sheet is subjected. Even in the conventional hot-rolling technology, roll-bonding does not occur on the first pass through a reversing mill. Second, roll-bonding has to be performed under carefully controlled conditions, such that lubricant or coolant does not enter the gap between the facing surfaces of the two sheets, and such that sticking to the rolls does not occur. The present invention addresses these concerns.

The present invention provides a method of making a composite aluminium brazing sheet, which method comprises: providing a core sheet of a first Al alloy and a cladding sheet of a second Al alloy, wherein a) the composition of the first Al alloy is different from the composition of the second Al alloy, and b) the thickness of the core sheet is greater than the thickness of the cladding sheet; cleaning facing surfaces of the core sheet and of the cladding sheet; and cold rolling the core sheet with the cladding sheet so as to roll bond them to make a composite aluminium sheet, characterised in that the core sheet is harder than the cladding sheet.

An Al alloy is any alloy in which aluminium is the major component. It is possible to use pure aluminium metal for the cladding sheet. The composition of the core alloy and the cladding alloy will depend on the intended use of the composite sheet For brazing sheet, the cladding alloy is generally a 4000 series alloy (of the Aluminum Association Register) and the core alloy may be a 3000 series alloy.

The core sheet is generally required to provide desired mechanical properties such as strength and formability in the composite sheet. The cladding sheet is generally required to provide particular surface properties in the composite sheet. A cladding layer may be provided on one or both surfaces of the core layer. The thickness of a cladding layer is preferably from 2 to 30%, more preferably 5 to 15% of the thickness of a core layer, although this range is not critical. Where a core layer is clad on both sides, the thicknesses of the two cladding layers and the alloys may be the same or different.

Facing surfaces of the core sheet and the cladding sheet are cleaned to ensure that they are capable of roll bonding under cold rolling conditions. Chemical cleaning, which involves removing a surface of the underlying metal, is satisfactory, but is in general not required. It is generally sufficient to subject the surfaces to an aqueous degrease with a non-etch degreaser. It is generally not necessary to remove a thin layer of aluminium oxide or magnesium oxide surface layer. Preferably the surfaces are cleaned by metal abrasion e.g. by the use of wire brushes; this may have the effect of redistributing, rather than removing, any naturally occurring surface oxide. After this cleaning step, the facing surfaces are dried and are then ready for the cold rolling step.

The cold rolling step is preferably performed continuously on continuous strip or coil. It is envisaged that rolls may be up to 1200 mm wide and up to 1000 mm diameter, and may operate at rolling speeds up to several hundred metres per minute The core sheet and the cladding sheet to be roll-bonded may be combined either on-line or off-line. Where cladding layers are to be applied to both surfaces of a core layer, the two roll bonding operations may be effected in separate passes through a rolling mill. Since the presence of liquid e.g. coolant or lubricant, between the facing surfaces of the core sheet and the cladding sheet would inhibit roll-bonding, it is preferred that the cold rolling step for roll-bonding be effected without use of any liquid lubricant or coolant A release agent may however be required to prevent the composite sheet from sticking to the rolls. Since sticking may nevertheless be a problem at high temperatures, it is preferred that the composite sheet exits the rolls at a temperature not greater than 50°C. The inventors have effected roll-bonding by cold rolling at a thickness reduction of as little as 15%. However this is expected to be substantially a minimum figure, and the cold-rolling step for roll bonding is preferably effected at a thickness reduction of 20 - 70% e.g. about 30%. Preferably the cold rolling step is effected in a single pass for each cladding sheet to be roll bonded to the core sheet.

It is a feature of the invention that the core sheet is harder than the cladding sheet (i.e. the cladding sheet is softer than the core sheet). This is intuitively surprising. One might expect that, if one sheet is much softer than the other, that one sheet will spread longitudinally and laterally during a continuous cold rolling operation, while the other sheet is scarcely deformed, and that laterally extending waves may be set up in the cladding layer of the composite sheet which may prevent effective bonding of the two layers. The inventors have determined that, although these effects may occur to a small extent, they are not a problem in practice. And there are sound metallurgical reasons, discussed below, for using a cladding sheet that is softer than the core sheet.

The cold rolling step described above results in a composite sheet in which a cladding layer is joined to a core layer by means of a strong and continuous or substantially continuous bond. If the composite sheet is too thick for its intended use, it may be subjected to further cold rolling. This would generally be in the presence of lubricant. The composite sheet may be subjected to an intermediate anneal, e.g. because the metal is too hard for further economic rolling, and/or a final anneal e.g. to provide the metal in a softer condition having improved formability or in the production of an intermediate temper. A final anneal may be performed either below a recrystallisation temperature, particularly where the sheet is to be formed into tube, or above the recrystallisation temperature of the core layer in order to improve formability. These subsequent cold rolling and annealing steps may enhance the bond between the cladding layer and the core layer. But such steps are believed not necessary to provide a bond capable of withstanding forming operations applied to brazing sheet. It is a surprising feature of the invention that a single cold rolling pass is generally effective to provide a substantial and continuous bond between a cladding layer and a core layer, such that the composite sheet will withstand the routine handling and forming operations that it is required to undergo.

The optimum hardnesses of the cladding sheet and the core sheet are related. If the cladding sheet is fully soft, then the core sheet may be half-hard. If the cladding sheet is half-hard, then the core sheet may be fully hard, e.g. by having been substantially work-hardened by cold rolling. During the roll-bonding step, a soft cladding sheet transfers strain to the core sheet and so avoids excessive heat build-up. If the cladding sheet becomes work-hardened more rapidly than does the core sheet, then an excessive spread of the cladding sheet (leading to an effect known as "alligatoring") may be avoided. In order that the composite sheet may be subjected to a final recrystallisation anneal to provide maximum formability, it may be necessary that the core sheet be in a partly work-hardened state before it is roll bonded with the cladding sheet. It may be convenient if the cladding sheet is slightly narrower than the core sheet. The hardnesses of the cladding sheet and of the core sheet need to be chosen in relation to their work hardening properties in order to obtain substantially equal elongation of the two.

This invention is expected to be of particular importance in relation to brazing alloy sheet of the kind comprising an aluminium-based core and on at least one side a cladding of an aluminium-based brazing alloy containing silicon as the main alloying ingredient. Brazing sheet of this kind, having good corrosion resistance and also sag resistance and post-brazed strength, is described in US patents 5.037,707 and 5,041,343 and in WO 94/22633 (Alcan International Limited). The core alloy is a 3000 series alloy of the following composition:-

| | Core Alloy |
|---|---|
| Fe | <0.4 |
| Si | <0.2 |
| Mn | 0.7 - 1.7 |
| Mg | 0 - 0.8 |
| Cu | 0.1 - 1.0 |
| V and/or Cr | <0.3 |
| Zn | <0.2 |
| Ti | <0.1 |
| Others | <0.05 each, <0.15 total |
| Al | Balance. |

Mg is present in the core to provide increased strength. Mg is not normally present in the cladding. When brazing sheet is made by the conventional technique of hot rolling a core sheet containing at least 0.05% Mg, and a cladding sheet, then there is significant migration of Mg from a region of the core layer close to the interface to a region of the cladding layer close to the interface. On the other hand, when such brazing sheet is formed by roll-bonding a core sheet and a cladding sheet by cold rolling, as in the present invention, there is no substantial migration of Mg across the boundary; and this is true even if the resulting brazing sheet has been subjected to a final recrystallisation anneal. It is thus possible to tell by inspection of a sample of brazing sheet whether the cladding was applied by hot rolling or by cold rolling.

Although the present cold cladding technique creates a definite interface zone containing elements have diffused in from both the cladding layer and the core, thus demonstrating that a metallurgical bond has formed, the Mg from the core does not diffuse into the cladding material beyond this zone, and in particular the Mg concentration adjacent to the outer surface of the cladding is not increased beyond the level originally present in the cladding material. Typically the core material will have more (i.e. a higher concentration) Mn, Cu and Mg than the cladding material, and the cladding material more Si than the core so that the interface zone contains more Si than the original core material and more Mn, Cu and Mg than the original cladding material.

Where the brazing sheet is subject to flux based brazing, the cladding material is typically manufactured with very low Mg levels since the Mg interferes with the brazing process. Typically Mg will be less than 0.1% in the cladding material and preferably is present only as an impurity (less than 0.05%). However, Mg will migrate from the core material during a hot-cladding process and can raise the Mg levels in the cladding material to a level where it interferes with the flux brazing process.

The core alloy used in the present cold cladding process preferably has at least 0.05% Mg and more preferably has at least 0.1 % Mg present as the dad sheet manufactured by the present process is surprisingly more tolerant of Mg in the core material than similar materials produced by hot cladding. This appears to be because the migration of Mg in the case of hot rolling the cladding sheet and core material increases the Mg concentration at the surface of the cladding where it enhances the formation of oxides during brazing and in the presence of fluoride fluxes often used in brazing, forms undesirable compounds with the flux that inhibit the brazing process. The presence of Mg at the interface between the core and cladding is however beneficial in promoting the formation of a Cu rich phase at the interface (the "brown band"), which has been found to yield enhanced corrosion resistance. The present invention has been found surprisingly to provide for sufficient diffusion of alloying elements along the interface to ensure that an effective "brown band" can form yet the Mg diffusion into the cladding layer is substantially eliminated.

Experiments have shown that the presence of a Mg concentration of 0.26% in the core material of a typical X900 alloy increases the corrosion resistance in a SWAAT test over that using a Mg concentration at 0.01 %, and therefore the ability to increase the Mg in the core alloy in the present invention permits an increase in corrosion resistance without the negative effects of diffusion of Mg into the cladding layer. In typical results, the pit depth in material containing 0.26% Mg in the core after a SWAAT test of 1000 hours was only 152 microns whereas the pit depth in material containing only 0.01% Mg in the core was, under the same conditions, greater than 370 microns (complete perforation).

The present invention may be used for applying a second cladding layer to a previously formed composite. For example, a composite formed by hot-cladding of a layer on a core material, may be used as the "core" of the present process and a further cladding layer applied to either side of the "core". This may be used, for example, to apply a second layer of a high Si aluminium alloy to an opposite side of a core material from the first such applied layer, or to create an interlayer structure using three different alloys where the core and "interlayer" come from the initial cladding operation and the outermost layer is applied by the cold-rolling operation to the "interlayer" side of the composite.

The method of the present invention, involving roll bonding by cold rolling, has the following advantages over the conventional hot rolling technique: '
- Increase in available hot mill time;
- Increased recovery;
- Reduced level of mixed scrap;
- Reduced usage of preheat furnaces - because it will be possible to hot roll the core alloy directly after homogenisation;
- Substantially reduced process costs.

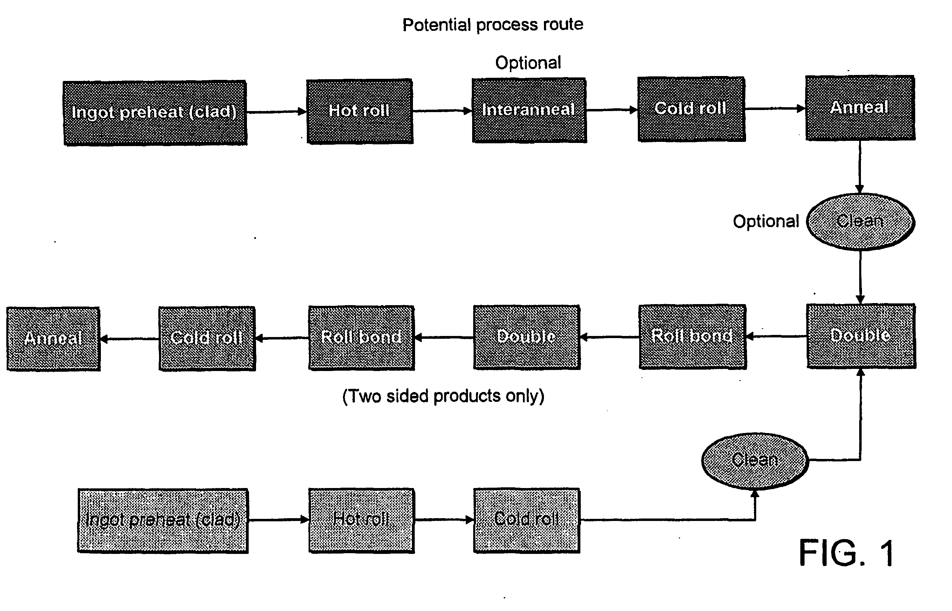

Reference is directed to the accompanying Figure 1, a flow chart showing the sequence of steps required to convert ingots of the cladding alloy and of the core alloy to an annealed composite sheet. The sequence of steps shown is a preferred one; some of the steps might be altered or omitted, as indicated above and in the appended claims.

### EXAMPLE 1

Laboratory experiments have been performed on a batch basis on the following materials.

The core sheet was of X900 alloy (1.5%Mn, 0.6%Cu, 0.27%Mg, 0.18%Fe, 0.09%Si) in the form of a temper-rolled i.e. fully hard sheet 3.5mm thick. The cladding alloy was an Al-Si alloy designated AA4045. Various cladding ratios i.e. 100% and 50% and 15% were investigated with the cladding soft annealed, fully hard or of intermediate hardness. The surfaces of the sheets were cleaned in various ways: -
- As rolled (i.e. not specially cleaned);
- By manual abrasion using Scotchbrite;
- By an aqueous degrease;
- By a caustic etch (which removes oxide and also surface metal).

One core sheet and one cladding sheet were subjected to cold rolling at a strain level of 20-70% by a single pass through a laboratory rolling mill without lubrication. The results were as follows. Where the sheets were used in an as-rolled state, no bonding was seen. But when the surfaces of the sheets had been cleaned by any of the techniques indicated, substantial and continuous bonds were obtained when the cladding was in the fully soft condition. Higher reductions were required when the cladding was harder as set out in the following table.

Bonding as a function of cold reduction and the hardness of the cladding

| **% Cold Reduction** | **Increasing Hardness of Cladding** | | |
|---|---|---|---|
| | **Soft** | **Intermediate Hardness** | **Fully Hard** |
| 10 | X | X | X |
| 30 | Y | X | X |
| 50 | Y | Y | X |
| 70 | Y | Y | Y |
| X = No Bond | | | |
| Y = Bond | | | |

### EXAMPLE 2

Samples were prepared as in Example 1 and roll bonded after cleaning by abrasion with Scotchbrite. The cladding, having the same thickness as the core, was in the fully soft condition and the core fully hard. 85% cold reduction was achieved in two passes, the first being 50% reduction. Both passes were without lubrication. Bond strength was then measured by a conventional Peel test at a strain rate of 20mm min⁻¹ in the as rolled condition and after annealing. The results were:

| | |
|---|---|
| As rolled Peel strength | 10±2MPa |
| After Annealing Peel Strength | 132-605MPa (two results) |

### EXAMPLE 3

Example 2 was repeated using AA4104 as the cladding material. This cladding is used for vacuum brazing. The peel test results were as follows:

| | |
|---|---|
| As Rolled Peel Strength | 10±3MPa |
| After Annealing Peel Strength | 147 - 185MPa |

### EXAMPLE 4

Annealed material from Examples 2 and 3 were subjected to a simulated brazing cycle and a cross section through the cladding and core examined metallographically. It was noted that a brown band was formed as described in EP 691 898. This is further proof that a metallurgical bond has formed since the formation of this band requires diffusion across the interface between the core and the cladding.

### EXAMPLE 5

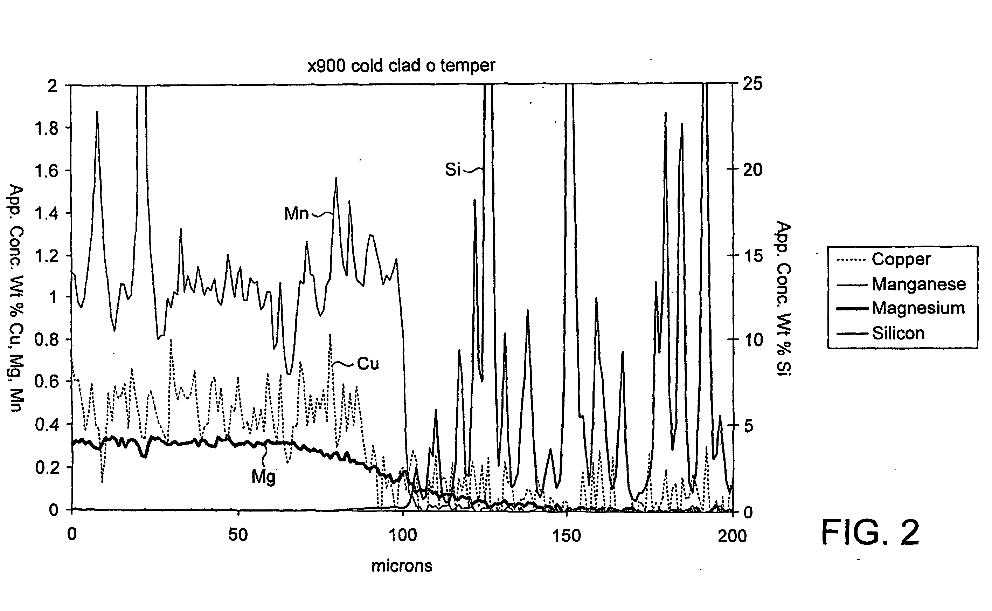

Figure 2 is a microprobe line scan through a composite sheet according to the invention, showing the distribution of four alloying elements on either side of a boundary between a core layer and a cladding layer. Note that there is little or no sign that Mg has migrated from the core layer to the cladding layer, i.e. there is substantially no Mg present in a region of the cladding layer adjoining the boundary.

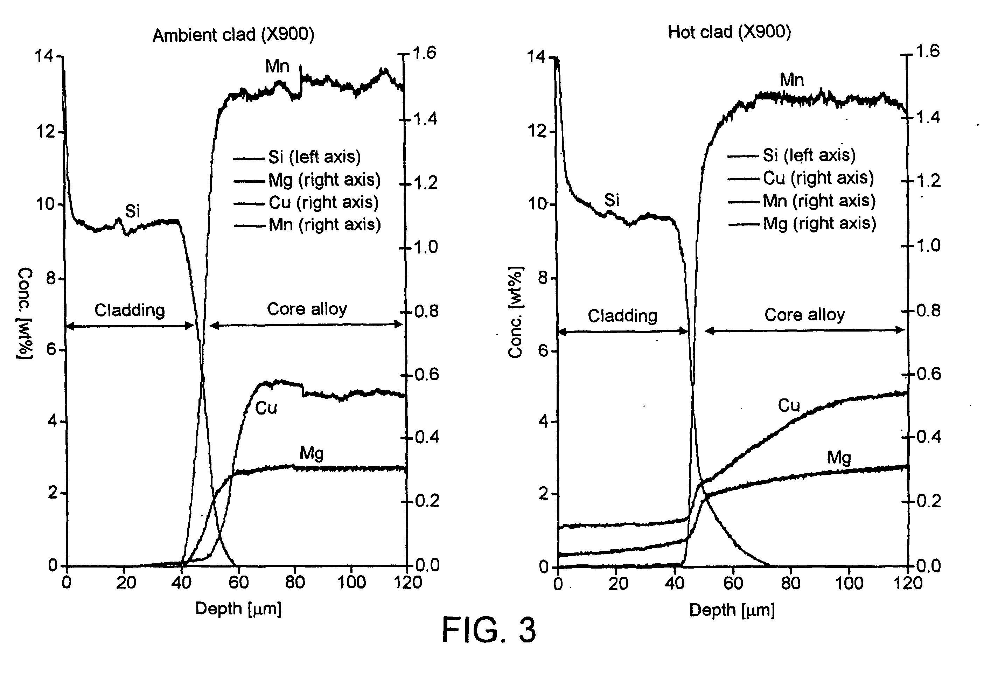

Figure 3 is a GDEOS (Glow Discharge Optical Emission Spectroscopy) scan of the same material that produces a clearer concentration profile of the material. The scan of the material produced by the process of the present invention shows that there is a clear layer of interdiffusion formed showing that the metallurgical bonding has occurred (in accordance with the finding of a "brown band" in Example 4). The same compositions formed into a clad sheet by hot rolling show the substantial amount of Mg diffusion extending to the surface of the cladding layer which would result in greater difficulty during flux brazing.

## Claims

1. A method of making a composite aluminium brazing sheet, which method comprises: providing a core sheet of a first Al alloy and a cladding sheet of a second Al alloy, wherein a) the composition of the first Al alloy is different from the composition of the second Al alloy, and b) the thickness of the core sheet is greater than the thickness of the cladding sheet; cleaning facing surfaces of the core sheet and of the cladding sheet; and cold rolling the core sheet with the cladding sheet so as to roll bond them to make a composite aluminium sheet, **characterised in that** the core sheet is harder than the cladding sheet.

2. The method of claim 1, wherein the facing surfaces of the core sheet and the cladding sheet are cleaned by mechanical abrasion or by an aqueous degrease.

3. The method of claim 1 or claim 2, wherein, in the composite aluminium sheet, the thickness of a cladding layer is from 5-15% of the thickness of a core layer.

4. The method of any one of claims 1 to 3, wherein cold rolling is performed continuously on continuous strip or coil.

5. The method of any one of claims 1 to 5, wherein cold rolling for roll bonding is effected in a single pass with a thickness reduction of 20-70%.

6. The method of any one of claims 1 to 5, wherein cold rolling for roll bonding is effected without use of any liquid lubricant or coolant.

7. The method of any one of claims 1 to 6, wherein the composite aluminium sheet has a temperature of no more than 50°C as it leaves the cold rolling step.

8. The method of any one of claims 1 to 7, wherein the composite aluminium sheet is subjected to cold rolling and/or to final anneal.

9. The method of any one of claims 1 to 8, wherein Mg is either absent from the second Al alloy or is present at a concentration substantially lower than in the first Al alloy, and wherein there is substantially no migration of Mg from the core sheet into the cladding sheet during the rolling process.

10. The method of any one of claims 1 to 9, wherein Mg is present in an amount of more than 0.05wt% in the first alloy and in an amount of less than 0.05wt% in the second alloy.

11. The method of any one of claims 1 to 10, wherein the second alloy comprises more Si than the first alloy.

12. The method of any one of claims 1 to 11, wherein the first alloy comprises more Mg, Mn and Cu than the second alloy.

13. The method of any one of claims 1 to 12, wherein an interface zone is present which comprises an Si concentration which is higher than in the first alloy and an Mn, Cu and Mg concentration which is higher than in the second alloy.

14. The method of any one of claims 1 to 13, wherein the composition of the first alloy is in wt%:
| | |
|---|---|
| Fe | <0.4 |
| Si | <0.2 |
| Mn | 0.7 - 1.7 |
| Mg | 0 - 0.8 |
| Cu | 0.1-1.0 |
| V and/or Cr | <0.3 |
| Zn | <0.2 |
| Ti | <0.1 |
| Others | <0.05 each, <0.15 total |
| Al | Balance. |

15. The method of any one of claims 1 to 14, further comprising the step of applying a further different Al alloy layer.

16. The method of claim 15, wherein said further different Al alloy layer is applied to the face of the core sheet which has not been clad by the method of any one of claims 1 to 14.

17. The method of claim 15, wherein said further different Al alloy layer is applied to the cladding sheet of the second Al alloy.

18. The method of any one of claims 15 to 17, wherein the core sheet comprises layers of two separated Al alloys which are both different from the cladding alloy.

## Patentansprüche

1. Verfahren zur Erzeugung eines Aluminium-Verbund-Lötblechs, wobei das Verfahren umfasst: Bereitstellen eines Kernblechs aus einer ersten Aluminium-Legierung sowie eines Auflageblechs aus einer zweiten Aluminium-Legierung, wobei a) die Zusammensetzung der ersten Aluminium-Legierung unterschiedlich zu der Zusammensetzung der zweiten Aluminiumlegierung ist und b) die Dicke des Kernblechs größer als die Dicke des Auflageblechs ist; das Reinigen der sich gegenüberliegenden Oberflächen des Kernblechs und des Auflageblechs; und Kaltwalzen des Kernblechs mit dem Auflageblech, um diese so zur Erzeugung eines Aluminium-Verbundblechs verbundzuwalzen, **dadurch gekennzeichnet, dass** das Kernblech härter als das Auflageblech ist.

2. Verfahren gemäß Anspruch 1, wobei die sich gegenüberliegenden Oberflächen des Kernblechs und des Auflageblechs mittels mechanischem Abrieb oder durch eine wässrige Entfettung gereinigt werden.

3. Verfahren gemäß Anspruch 1 oder Anspruch 2, wobei in dem Aluminium-Verbundblech die Dicke der Auflageschicht 5 bis 15 % der Dicke der Kernschicht beträgt.

4. Verfahren gemäß einem der Ansprüche 1 bis 3, wobei das Kaltwalzen kontinuierlich auf ein kontinuierliches Band oder Coil angewandt wird.

5. Verfahren gemäß einem der Ansprüche 1 bis 5, wobei das Kaltwalzen zum Verbundwalzen in einem einzelnen Stich mit einer Dickenreduktion von 20 bis 70% erfolgt.

6. Verfahren gemäß einem der Ansprüche 1 bis 5, wobei Kaltwalzen zum Verbundwalzen ohne Verwendung eines flüssigen Schmier- oder Kühlmittels erfolgt.

7. Verfahren gemäß einem der Ansprüche 1 bis 6, wobei das Aluminium-Verbundblech eine Temperatur von nicht mehr als 50°C aufweist, wenn es den Kaltwalzschritt verlässt.

8. Verfahren gemäß einem der Ansprüche 1 bis 7, wobei das Aluminium-Verbundblech einem Kaltwalzen und/oder einer Abschlussglühung unterworfen wird.

9. Verfahren gemäß einem der Ansprüche 1 bis 8, wobei in der zweiten Aluminiumlegierung Magnesium entweder nicht oder bei einer Konzentration wesentlich geringer als in der ersten Aluminiumlegierung vorliegt und wobei während des Walzprozesses im Wesentlichen keine Wanderung von Magnesium aus dem Kernblech in das Auflageblech erfolgt.

10. Verfahren gemäß einem der Ansprüche 1 bis 9, wobei Magnesium in einer Menge von mehr als 0,05 Gew.-% in der ersten Legierung und in einer Menge von weniger als 0,05 Gew.-% in der zweiten Legierung vorliegt.

11. Verfahren gemäß einem der Ansprüche 1 bis 10, wobei die zweite Legierung mehr Silizium als die erste Legierung umfasst.

12. Verfahren gemäß einem der Ansprüche 1 bis 11, wobei die erste Legierung mehr Magnesium, Mangan und Kupfer als die zweite Legierung umfasst.

13. Verfahren gemäß einem der Ansprüche 1 bis 12, wobei eine Grenzflächen-Zone vorliegt, die eine Silizium-Konzentration, die höher als in der ersten Legierung ist, sowie eine Mangan-, Kupfer- und Magnesium-Konzentration, die höher als in der zweiten Legierung ist, umfasst.

14. Verfahren gemäß einem der Ansprüche 1 bis 13, wobei die Zusammensetzung der ersten Legierung in Gew.-% ist:
| | |
|---|---|
| Fe | <0,4 |
| Si | <0,2 |
| Mn | 0,7-1,7 |
| Mg | 0-0,8 |
| Cu | 0,1-1,0 |
| V und/oder Cr | <0,3 |
| Zn | <0,2 |
| Ti | <0,1 |
| Andere | jeweils <0,05, zusammen <0,15 |
| Al | Rest. |

15. Verfahren gemäß einem der Ansprüche 1 bis 14, des Weiteren umfassend den Schritt des Aufbringens einer weiteren Schicht einer unterschiedlichen Aluminium-Legierung.

16. Verfahren gemäß Anspruch 16, wobei die weitere Schicht aus unterschiedlicher Aluminium-Legierung auf die Oberfläche des Kernblechs, die nicht mittels des Verfahrens gemäß einem der Ansprüche 1 bis 14 plattiert ist, aufgebracht wird.

17. Verfahren gemäß Anspruch 15, wobei die weitere Schicht aus unterschiedlicher Aluminium-Legierung auf das Auflageblech der zweiten Aluminium-Legierung aufgebracht wird.

18. Verfahren gemäß einem der Ansprüche 15 bis 17, wobei das Kernblech Schichten zweier getrennter Aluminium-Legierungen umfasst, die beide unterschiedlich von der Auflage-Legierung sind.

## Revendications

1. Procédé de fabrication d'une tôle à brasage en aluminium composite, ledit procédé comprenant : la fourniture d'une tôle de coeur d'un premier alliage de Al et d'une tôle de gaine d'un second alliage de Al, dans lesquelles a) la composition du premier alliage de Al est différente de la composition du second alliage de Al, et b) l'épaisseur de la tôle de coeur est supérieure à l'épaisseur de la tôle de gaine ; le nettoyage des surfaces se faisant face de la tôle de coeur et de la tôle de gaine ; et le laminage à froid de la tôle de coeur avec la tôle de gaine de manière à les colaminer pour fabriquer une tôle d'aluminium composite, **caractérisé en ce que** la tôle de coeur est plus dure que la tôle de gaine.

2. Procédé de la revendication 1, dans lequel les surfaces se faisant face de la tôle de coeur et de la tôle de gaine sont nettoyées par abrasion mécanique ou par un dégraissant aqueux.

3. Procédé de la revendication 1 ou la revendication 2, dans lequel, dans la tôle d'aluminium composite, l'épaisseur d'une couche de gaine est de 5 à 15 % de l'épaisseur d'une couche de coeur.

4. Procédé de l'une quelconque des revendications 1 à 3, dans lequel le laminage à froid est effectué en continu sur une bande ou une bobine continue.

5. Procédé de l'une quelconque des revendications 1 à 5, dans lequel le laminage à froid pour le colaminage est effectué en un seul passage avec une réduction d'épaisseur de 20 à 70 %.

6. Procédé de l'une quelconque des revendications 1 à 5, dans lequel le laminage à froid pour le colaminage est effectué sans utilisation d'un liquide lubrifiant ou refroidisseur.

7. Procédé de l'une quelconque des revendications 1 à 6, dans lequel la tôle d'aluminium composite a une température de pas plus de 50°C lorsqu'elle quitte l'étape de laminage à froid.

8. Procédé de l'une quelconque des revendications 1 à 7, dans lequel la tôle d'aluminium composite est soumise à un laminage à froid et/ou à un recuit final.

9. Procédé de l'une quelconque des revendications 1 à 8, dans lequel Mg est absent du second alliage de Al ou est présent à une concentration sensiblement plus faible que dans le premier alliage de Al, et dans lequel il n'y a sensiblement pas de migration de Mg de la tôle de coeur dans la tôle de gaine durant le processus de laminage.

10. Procédé de l'une quelconque des revendications 1 à 9, dans lequel Mg est présent en une quantité de plus de 0,05 % en poids dans le premier alliage et en une quantité de moins de 0,05 % en poids dans le second alliage.

11. Procédé de l'une quelconque des revendications 1 à 10, dans lequel le second alliage comprend plus de Si que le premier alliage.

12. Procédé de l'une quelconque des revendications 1 à 11, dans lequel le premier alliage comprend plus de Mg, Mn et Cu que le second alliage.

13. Procédé de l'une quelconque des revendications 1 à 12, dans lequel une zone d'interface est présente qui comprend une concentration de Si qui est supérieure à celle dans le premier alliage et une concentration de Mn, Cu et Mg qui est supérieure à celle dans le second alliage.

14. Procédé de l'une quelconque des revendications 1 à 13, dans lequel la composition du premier alliage est en % en poids :
| | |
|---|---|
| Fe | < 0,4 |
| Si | < 0,2 |
| Mn | 0,7 à 1,7 |
| Mg | 0 à 0,8 |
| Cu | 0,1 à 1,0 |
| V et/ou Cr | < 0,3 |
| Zn | < 0,2 |
| Ti | < 0,1 |
| Autres | chacun < 0,05, total < 0,15 |
| Al | Complément |

15. Procédé de l'une quelconque des revendications 1 à 14, comprenant en outre l'étape d'application d'une couche supplémentaire d'alliage de Al différent.

16. Procédé de la revendication 15, dans lequel ladite couche supplémentaire d'alliage de Al différent est appliquée sur la face de la tôle de coeur qui n'a pas été gainée par le procédé de l'une quelconque des revendications 1 à 14.

17. Procédé de la revendication 15, dans lequel ladite couche supplémentaire d'alliage de Al différent est appliquée sur la tôle de gainage du second alliage de Al.

18. Procédé de l'une quelconque des revendications 15 à 17, dans lequel la tôle de coeur comprend des couches de deux alliages de Al séparés qui sont tous deux différents de l'alliage de gaine.
